(19) Europäisches Patentamt
European Patent Office
Office européen des brevets

(11) **EP 1 263 690 B2**

(12) **NOUVEAU FASCICULE DE BREVET EUROPEEN**
Après la procédure d'opposition

(45) Date de publication et mention de la décision concernant l'opposition:
**12.09.2012 Bulletin 2012/37**

(45) Mention de la délivrance du brevet:
**01.09.2004 Bulletin 2004/36**

(21) Numéro de dépôt: **01907735.3**

(22) Date de dépôt: **08.02.2001**

(51) Int Cl.:
*C04B 28/02* (2006.01)    *C04B 16/06* (2006.01)
*C04B 28/02* (2006.01)    *C04B 14/06* (2006.01)
*C04B 14/20* (2006.01)    *C04B 14/46* (2006.01)
*C04B 14/48* (2006.01)    *C04B 16/06* (2006.01)
*C04B 18/14* (2006.01)    *C04B 111/28* (2006.01)

(86) Numéro de dépôt international:
**PCT/FR2001/000369**

(87) Numéro de publication internationale:
**WO 2001/058826 (16.08.2001 Gazette 2001/33)**

(54) **COMPOSITION DE BETON ULTRA HAUTE PERFORMANCE RESISTANT AU FEU**

FEUERBESTÄNDIGE ULTRA-HOCHLEISTUNGSBETONZUSAMMENSETZUNG

FIRE-RESISTANT HIGH PERFORMANCE CONCRETE COMPOSITION

(84) Etats contractants désignés:
**AT BE CH CY DE DK ES FI FR GB GR IE IT LI LU MC NL PT SE TR**
Etats d'extension désignés:
**LT LV RO SI**

(30) Priorité: **11.02.2000 FR 0001742**

(43) Date de publication de la demande:
**11.12.2002 Bulletin 2002/50**

(73) Titulaires:
• **BOUYGUES TRAVAUX PUBLICS**
**78190 Saint Quentin en Yvelines (FR)**
• **Lafarge**
**75116 Paris (FR)**

(72) Inventeurs:
• **ORANGE, Gilles**
**F-95230 Soisy sous Montmorency (FR)**
• **PRAT, Evelyne**
**F-93500 Pantin (FR)**
• **CASANOVA, André Pascal**
**W4 5LZ London (GB)**
• **BEHLOUL, Mouloud**
**F-75015 Paris (FR)**

(74) Mandataire: **Pochart, François et al**
**August & Debouzy avocats**
**6-8, avenue de Messine**
**FR-75008 Paris (FR)**

(56) Documents cités:
**EP-A- 0 934 915    DE-A- 19 654 502**
**FR-A- 2 778 654**

• **DATABASE WPI Section Ch, Week 198908 Derwent Publications Ltd., London, GB; Class L02, AN 1989-059523 XP002149582 & SE 8 701 395 A (AB INST INNOVATIONS), 4 octobre 1988 (1988-10-04)**
• **ORGANISATION INTERNATIONALE DE NORMALISATION NORME 150-2768 15 Novembre 1989, CASE POSTALE 56, CH-1211 GENÈVE 20, SUISSE,**
• **ASSOCIATION FRANÇAISE DE NORMALISATION NORME EN-459-2 Octobre 2002, 11 AVENUE FRANCIS DE PRESSENSÉ, 93571 SAINT DENIS LA PLAINE CEDEX, FRANCE,**
• **ASSOCIATION FRANÇAISE DE NORMALISATION NORME EN-12350-5 Décembre 1999, TOUR EUROPE, 92049 PARIS, LA DÉFENSE CEDEX,**

Remarques:
Le dossier contient des informations techniques présentées postérieurement au dépôt de la demande et ne figurant pas dans le présent fascicule.

**Description**

La présente invention appartient au domaine des bétons, plus particulièrement des bétons de fibres. En particulier, la présente invention vise à obtenir, pour un béton ultra haute performance permettant notamment de fabriquer des éléments de structures destinés à la réalisation de bâtiments et d'ouvrages d'art, une tenue élevée au feu associée à une rhéologie contrôlable et des performances mécaniques élevées. Elle a aussi pour objet un béton amélioré et ayant des propriétés anti-feu supérieures à celles des éléments de la techniques antérieure.

Les bétons ductiles dits "ultra hautes performances" sont utilisés notamment pour la construction d'éléments en béton précontraints ou non nécessitant des propriétés mécaniques supérieures, notamment une résistance élevée à la compression. Ces bétons présentent une résistance élevée en flexion typiquement d'au moins 20 MPa, et une résistance à la compression à 28 jours d'au moins 120 MPa, un module d'élasticité à 28 jours supérieur à 45 GPa, ces valeurs étant données pour un béton conservé et maintenu à 20°C.

Pour améliorer les caractéristiques mécaniques de ces bétons, différentes solutions ont été préconisées.

Ainsi, WO 95/01 316 propose d'incorporer des fibres métalliques en une quantité contrôlée et ayant des dimensions choisies dans des proportions déterminées par rapport à celle des éléments granulaires constituant la matrice du béton.

WO 99/28267 a également pour objet des bétons ultra hautes performances comportant des fibres métalliques. Pour améliorer la tenue mécanique des bétons, notamment leur comportement à la fois vis à vis de l'apparition de microfissures et de la propagation de macrofissures, ce document propose d'incorporer à la matrice cimentaire des éléments améliorant la ténacité choisis parmi les éléments aciculaires ou plaquettaires ayant une taille moyenne d'au plus 1 mm.

Les éléments aciculaires mentionnés sont des fibres minérales, telles que wollastonite, bauxite, multite, titanate de potassium, carbure de silicium, carbonate de calcium, hydroxyapatite ou des fibres organiques dérivées de la cellulose, ces fibres pouvant éventuellement présenter un revêtement de surface en un composé organique polymère.

WO 99/58468 a pour objet des bétons ultra hautes performances comprenant des fibres organiques comme fibres renforts afin d'améliorer la ductibilité de ces bétons. Dans cette demande, on envisage aussi des bétons ultra hautes performances dans lesquels une partie des fibres organiques est remplacée par des fibres métalliques. Il est aussi décrit que les fibres organiques modifient le comportement au feu du béton.

Les bétons décrits ci dessus très performants par leurs propriétés mécaniques présentent cependant une résistance au feu insuffisante qui se traduit au mieux par un écaillage des structures exposées au feu et pouvant aller jusqu'à l'explosion de ces structures dues à la pression de la vapeur de l'eau fixée physiquement et chimiquement par les constituants de la matrice sous l'action de la chaleur.

Le brevet US 5 749 961 propose d'améliorer la propriété de résistance au feu de compositions pour bétons hautes performances sans fibre ayant des résistances à la compression de l'ordre de 90 à 105 MPa par addition dans ces compositions d'une combinaison de silice précipitée et de fibres capables de former par dissolution, ramollissement, décomposition, rétrécissement ou fusion, un réseau de pores capillaires d'un diamètre d'au moins 10 $\mu$m et d'une longueur d'au moins 5 mm. Cependant, un des moyens invoqué dans ce brevet et largement pratiqué dans les bétons réfractaires qui consiste à introduire des fibres organiques dans le béton font sérieusement chuter d'une part les résistances mécaniques du béton durci car les fibres introduisent un volume d'élasticité plus faible que celui de la matrice. D'autre part, les propriétés rhéologiques du béton à l'état frais se trouvent sérieusement détériorées par la présence des fibres organiques dans la composition, et se caractérisent par un étalement faible.

Il devient alors difficilement envisageable d'appliquer de telles solutions à des bétons ductiles ultra hautes performances tels que décrits dans les demandes de brevets WO 99/28267 et WO 99/58468 qui préconisent déjà des volumes de fibres de l'ordre de 2 %.

Il est important de pouvoir disposer de compositions pour bétons ultra hautes performances ayant une gamme de rhéologie pouvant aller d'un comportement plastique à un comportement fluide. De tels bétons présentent de façon conventionnelle une valeur d'étalement d'au moins 150 mm, la valeur d'étalement étant mesurée par la technique de la table à choc, technique normalisée utilisée généralement pour les mortiers.

Jusqu'à ce jour pourtant, de telles compositions de béton présentent le défaut d'une résistance médiocre au feu

Jusqu'à ce jour, les tentatives pour améliorer les propriétés mécaniques des bétons ultra hautes performances ont eu des effets néfastes sur la résistance au feu. Inversement, les solutions proposées pour améliorer la tenue au feu des bétc ns en général ont pour effet de diminuer les propriétés mécaniques et/ou rhéologiques de ces bétons à l'état non durci.

Il n'existe donc pas de solution satisfaisante au problème de la tenue au feu des bétons ultra hautes performances comprenant des fibres, compatibles avec les propriétés recherchées pour ces bétons, à savoir une résistance élevée en traction/flexion, une résistance élevée en compression et une rhéologie du béton à l'état non durci pouvant aller d'un comportement plastique à un comportement fluide.

La présente invention a pour objet un béton ultra haute performance contenant des fibres métalliques de renfort, possédant des propriétés au moins équivalentes à celles des bétons similaires de la technique antérieure, présentant une rhéologie du béton à l'état non durci pouvant aller d'un comportement plastique à un comportement fluide et une bonne tenue au feu.

Ce but est atteint avec la présente invention qui consiste en l'utilisation de fibres organiques présentant une température de fusion inférieure à 200°C, une longueur moyenne 1 supérieure à 1 mm, et un diamètre $\varnothing$ d'au plus 200 $\mu$m, dans un béton ultra haute performance pour améliorer la résistance au feu du béton, la quantité de fibres organiques étant telle que leur volume est compris entre 0,1 et moins de 1 % du volume du béton après la prise et le béton présentant une résistance caractéristique à la compression à 28 jours d'au moins 120 MPa, une résistance caractéristique à la flexion d'au mois 20 MPa, et une valeur d'étalement à l'état non durci d'au moins 150 mm, ces valeurs étant données pour un béton conservé et maintenu à 20°C, ledit béton étant constitué d'une matrice cimentaire durcie dans laquelle sont dispersées des fibres métalliques, provenant du mélange avec de l'eau d'une composition comprenant outre les fibres :

(a) du ciment ;
(b) des éléments granulaires ayant une taille de grain $D_{90}$ d'au plus 10 mm ;
(c) des éléments à réaction pouzzolanique ayant une taille de particules élémentaires comprise entre 0,1 et 100 $\mu$m,
(d) au moins un agent dispersant ;

et répondant aux conditions suivantes :

(1) le pourcentage en poids de l'eau par rapport au poids cumulé du ciment (a) et des éléments (c) est compris dans la gamme 8-24 % ;
(2) les fibres métalliques présentent une longueur moyenne $l_1$ d'au moins 2 mm, et un rapport $l_1/\varnothing_1$, $\varnothing_1$ étant le diamètre des fibres, d'au moins 20 ;
(3) le rapport $V_1/V$ du volume $V_1$ des fibres métalliques au volume V des fibres organiques est supérieur à 1, et le rapport $l_1/l$ de la longueur des fibres métalliques à la longueur des fibres organiques est supérieur à 1.
(4) le rapport R entre la longueur moyenne $l_1$ des fibres métalliques et la taille $D_{90}$ des éléments granulaires est d'au moins 3, de préférence d'au moins 5.
(5) la quantité de fibres métalliques est telle que leur volume est inférieur à 4 % du volume du béton après la prise.

L'invention a également pour objet un béton ultra haute performance résistant au feu et présentant une résistance caractéristique à la compression à 28 jours d'au moins 120 MPa, une résistance caractéristique à la flexion d'au moins 20 MPa, et une valeur d'étalement à l'état non durci d'au moins 150 mm, ces valeurs étant données pour un béton conservé et maintenu à 20°C ;

ledit béton étant constitué d'une matrice cimentaire durcie dans laquelle sont dispersées des fibres métalliques, provenant du mélange avec de l'eau d'une composition comprenant outre les fibres :

(a) du ciment ;
(b) des éléments granulaires ayant une taille de grain $D_{90}$ d'au plus 10 mm ;
(c) des éléments à réaction pouzzolanique ayant une taille de particules élémentaires comprise entre 0,1 et 100 $\mu$m,
(d) au moins un agent dispersant ;
(e) des fibres organiques ;

et répondant aux conditions suivantes :

(1) le pourcentage en poids de l'eau par rapport au poids cumulé du ciment (a) et des éléments (c) est compris dans la gamme 8-24 % ;
(2) les fibres métalliques présentent une longueur moyenne $l_1$ d'au moins 2 mm, et un rapport $l_1/\varnothing_1$, $\varnothing_1$ étant le diamètre des fibres, d'au moins 20 ;
(3) les fibres organiques présentent un point de fusion inférieur à 200°C, une longueur moyenne l supérieure à 1 mm et un diamètre $\varnothing$ d'au plus 200 $\mu$m ;
(4) le rapport $V_1/V$ du volume $V_1$ des fibres métalliques au volume V des fibres organiques est supérieur à 1, et le rapport $l_1/l$ de la longueur $l_1$ des fibres métalliques à la longueur l des fibres organiques est supérieur à 1 ;
(5) le rapport R entre la longueur moyenne $l_1$ des fibres métalliques et la taille $D_{90}$ des éléments granulaires est d'au moins 3, de préférence au moins 5;
(6) la quantité de fibres métalliques est telle que leur volume est inférieur à 4 % du volume du béton après la prise ;
(7) la quantité de fibres organiques est telle que leur volume est compris entre 0,1 et moins de 1 % du volume du béton après la prise.

Ainsi, grâce à une conception nouvelle de la matrice cimentaire et de sa relation avec les fibres de renfort, cette solution répond au problème posé avec ce compromis propriétés mécaniques/rhéologie/tenue au feu.

Par "matrice cimentaire", on désigne la composition cimentaire durcie hors fibres métalliques.

$D_{90}$ signifie que 90 % en poids des éléments granulaires ont une taille de grains inférieure ou égale à 10 mm, la taille de grains étant mesurée par les tailles mailles des tamis dont le passant constitue 90 % du poids total des grains.

$D_{75}$ signifie que 75 % en poids des éléments granulaires ont une taille de grains inférieure ou égale à 10 mm, la taille de grains étant mesurée par les tailles des mailles des tamis dont le passant constitue 75 % du poids total des grains.

Par "fibres organiques", on entend toutes fibres polymères répondant aux conditions ci dessus.

Dans le cadre de l'invention, on entend aussi par diamètre des fibres, le diamètre équivalent lorsque les fibres sont de section non circulaire.

Par "résistance à la flexion", on entend la résistance à la flexion 4 points mesurée sur des éprouvettes de dimensions 7x7x28 cm.

Avantageusement, les fibres organiques ont une longueur l supérieure à 1,5 mm et égale au plus à 12 mm.

Le rapport l/$\varnothing$ est avantageusement compris entré 20 et 500.

Selon un mode de réalisation de l'invention, le diamètre des fibres organiques est compris entre 2 et 100 $\mu$m, de préférence inférieur à 80 $\mu$m.

Le rapport $V_1$/V est de préférence d'au moins 2.

On peut citer notamment les fibres organiques qui consistent en un homopolymère ou copolymère choisis parmi des polyacrylamide, polyéthersulfone, chlorure de polyvinyl, polyéthylène, polypropylène, polystyrène et polyamide ces homopolymère ou copolymère présentant une température de fusion inférieure à 200°C, seul ou en mélange. Selon un mode de réalisation particulier, les fibres organiques sont des fibres polypropylène de longueur 6 mm et de diamètre de 18 $\mu$m.

Pour ce qui est des fibres métalliques, il peut s'agir de fibres métalliques choisies parmi les fibres d'acier telles que les fibres d'acier à haute tenue mécanique, les fibres d'acier amorphe, ou encore les fibres d'acier inoxydable. Eventuellement, les fibres d'acier peuvent être revêtues d'un métal non ferreux tel que le cuivre, le zinc, le nickel (ou leurs alliages).

La longueur moyenne des fibres métalliques est de préférence comprise dans la gamme 5-30 mm. Le rapport $l_1$/$\varnothing_1$ est de préférence d'au plus 200.

On peut utiliser des fibres métalliques à géométrie variable. Elles peuvent être crénelées, ondulées ou crochetées aux extrémités. On peut également jouer sur la rugosité des fibres et/ou utiliser des fibres à section transversale variable. Les fibres peuvent être obtenues par toute technique appropriée, y compris par tressage ou câblage de plusieurs fils métalliques formant une torsade.

La quantité de fibres métalliques est telle que leur volume est de préférence inférieur à 3,5 % du volume du béton après la prise.

Avantageusement, la contrainte d'adhérence moyenne des fibres métalliques dans la matrice cimentaire durcie doit être d'au moins 10 MPa, de préférence d'au moins 15 MPa. Cette contrainte est déterminée par essai d'extraction d'une monofibre encastrée dans un bloc de béton.

Il a été observé que les bétons selon l'invention présentent de plus à la fois une telle contrainte d'adhérence des fibres et une ténacité de matrice élevée (de préférence d'au moins 15 J/m$^2$) conduisent à de meilleures performances mécaniques, par synergie entre ces deux propriétés.

Le niveau d'adhérence fibre/matrice peut être contrôlé par plusieurs moyens que l'on peut utiliser individuellement ou simultanément

Selon un premier moyen, l'adhérence des fibres dans la matrice cimentaire peut être obtenue par traitement de surface des fibres. Ce traitement des fibres peut être effectué par au moins l'un des procédés suivants :

- attaque chimique des fibres ;
- dépôt d'un composé minéral sur les fibres, notamment par dépôt d'un phosphate métallique.

L'attaque chimique peut être réalisée, par exemple, par mise en contact des fibres avec un acide, puis neutralisation.

Le dépôt de phosphate métallique est généralement obtenu par un procédé de phosphatation, lequel consiste à introduire les fibres métalliques préalablement décapées dans une solution aqueuse comprenant un phosphate métallique, de préférence du phosphate de manganèse ou de zinc, puis à filtrer la solution pour récupérer les fibres. Les fibres sont ensuite rincées, neutralisées, puis rincées à nouveau. Contrairement au procédé habituel de phosphatation, les fibres obtenues ne doivent pas subir de finition de type grasse. On peut par contre les imprégner éventuellement d'un additif soit pour apporter une protection anticorrosion, soit pour faciliter leur mise en oeuvre avec le milieu cimentaire. Le traitement de phosphatation peut également être obtenu en enduisant ou pulvérisant la solution de phosphate métallique sur les fibres.

Tout type de procédé de phosphatation peut être utilisé, on peut se reporter à ce sujet aux traitements décrits dans l'article de G. Lorin, "La phosphatation des métaux'', 1973.

Selon un deuxième moyen; la contrainte d'adhérence des fibres dans la matrice cimentaire peut être obtenue par introduction dans la composition d'au moins un des composés suivants : les composés de la silice comprenant majoritairement de la silice, du carbonate de calcium précipité, de l'alcool polyvinylique en solution aqueuse, un latex ou un mélange desdits composés.

Par composé de la silice comprenant majoritairement de la silice, on entend ici les produits de synthèse choisis parmi les silices de précipitation, les sols de silice, les silices de pyrogénation (type Aérosil), les silico-aluminates, par exemple le Tixosil 28 commercialisé par Rhône-Poulenc, ou les produits type argile (naturels ou dérivés) : par exemple les smectites, les silicates de magnésium, les sépiolites, les montmorillonites.

On utilise de manière préférée au moins une silice de précipitation.

Par silice de précipitation, on entend ici une silice obtenue par précipitation à partir de la réaction d'un silicate de métal alcalin avec un acide, en général inorganique, à un pH adéquat du milieu de précipitation, en particulier un pH basique, neutre ou peu acide ; le mode de préparation de la silice peut être quelconque (addition d'acide sur un pied de cuve de silicate, addition simultanée totale ou partielle d'acide ou de silicate sur un pied de cuve d'eau ou de solution de silicate, etc...) et est choisi en fonction du type de silice que l'on souhaite obtenir ; à l'issue de l'étape de précipitation, on procède en général à une étape de séparation de la silice du milieu réactionnel selon tout moyen connu, filtre presse ou filtre sous vide par exemple ; on recueille ainsi un gâteau de filtration, lequel est lavé si nécessaire ; ce gâteau peut, éventuellement après délitage, être séché par tout moyen connu, notamment par atomisation, puis éventuellement broyé et/ou aggloméré.

En général, la quantité de silice de précipitation introduite est comprise entre 0,1% et 5% en poids, exprimé en sec, par rapport au poids total du béton. Au delà de 5%, on observe habituellement des problèmes de rhéologie lors de la préparation du mortier.

De préférence, la silice de précipitation est introduite dans la composition sous forme d'une suspension aqueuse, il peut notamment s'agir d'une suspension aqueuse de silice présentant :

- une teneur en matière sèche de 10 à 40% en poids :
- une viscosité inférieure à $4.10^{-2}$ Pa.s pour un cisaillement de 50 $s^{-1}$,
- une quantité de silice contenue dans le surnageant de ladite suspension, à 7500 trs/min pendant 30 min, de plus de 50% du poids de la silice contenue dans la suspension.

Cette suspension est plus particulièrement décrite dans la demande de brevet WO-A-96/01787. La suspension de silice Rhoximat CS 60 SL commercialisée par Rhône-Poulenc convient particulièrement pour ce type de béton.

Le ciment (a) du béton selon l'invention est avantageusement un ciment Portland tel que les ciments Portland CPA PMES, HP, HPR, CEM l PMES, 52,5 ou 52,5 R ou HTS (haute teneur en silice).

Les éléments granulaires (b) sont essentiellement des sables ou des mélanges de sable, tamisés ou broyés, pouvant avantageusement comprendre des sables siliceux, en particulier de la farine de quartz.

La taille de grain $D_{75}$ de ces éléments est de préférence d'au plus 6 mm.

Ces éléments granulaires sont en général présents à raison de 20 à 60% en poids de la matrice cimentaire, de préférence de 25 à 50% en poids de ladite matrice.

Les éléments fins à réaction pouzzolanique (c) présentent une taille de particules élémentaires de préférence au moins 0,1 $\mu$m et d'au plus 20 $\mu$m, de préférence d'au plus 5 $\mu$m. Ils peuvent être choisis parmi les composés de silice, les cendres volantes, les laitiers de hauts-fourneaux, les dérivés d'argiles tels que le kaolin. La silice peut être une fumée de silice provenant de l'industrie du zirconium plutôt qu'une fumée de silice provenant de l'industrie du silicium.

Dans le cadre de l'invention, les bétons décrits précédemment comprennent de façon optionnelle des éléments de renfort. Ces éléments de renfort sont ajoutés à la composition formant la matrice afin d'en augmenter la ténacité.

La ténacité est exprimée soit en termes de contrainte (facteur d'intensité de contrainte : Kc), soit en termes d'énergie (taux critique d'énergie : Gc), en utilisant le formalisme de la Mécanique Linéaire de la Rupture. De préférence, la ténacité de la matrice cimentaire est d'au moins 15 J/m², avantageusement d'au moins 20 J/m². La méthode de mesure de la ténacité a été décrite dans la demande de brevet PCT WO 99/28267.

La ténacité de la matrice cimentaire est avantageusement obtenue par ajout à la composition cimentaire d'éléments de renfort de taille moyenne d'au plus 1 mm, de préférence d'au plus 500 $\mu$m, se présentant sous une forme aciculaire ou sous forme de plaquettes. Ils sont en général présents dans une proportion volumique inférieure à 35 %, en particulier dans la gamme 5-25 % du volume cumulé des éléments granulaires (b) et des éléments à réaction pouzzolanique (c).

Par "taille" des éléments renforts, on entend la taille de leur dimension la plus grande (notamment la longueur pour les formes aciculaires).

Il peut s'agir de produits naturels ou de synthèse.

Les éléments renforts de forme aciculaire sont avantageusement choisis parmi des fibres de longueur inférieure à 1 mm par exempte les fibres de wollastonite, les fibres de bauxite, les fibres de mullite, les fibres de titanate de potassium, les fibres de carbure de silicium, les fibres de cellulose ou de dérivés de cellulose, tels que l'acétate de cellulose, les fibres de carbone, les fibres de carbonate de calcium, les fibres d'hydroxapatite et autres phosphates de calcium, ou les produits dérivés obtenus par broyage desdites fibres et les mélanges desdites fibres.

De préférence, on utilise des éléments renforts dont l'acicularité, exprimée par le rapport longueur/diamètre, est au minimum de 3 et de préférence au minimum de 5.

Les fibres de wollastonite ont donné de bons résultats. Les éléments renforts sous forme de plaquette peuvent être choisis parmi les plaquettes de mica, les plaquettes de talc, les plaquettes de silicate mixtes (argiles), les plaquettes de vermiculite, les plaquettes d'alumine et aluminates ou silicates mixtes et les mélanges desdites plaquettes.

Les plaquettes de mica ont donné de bons résultats.

Il est possible d'utiliser des combinaisons de ces différentes formes ou natures d'éléments renforts dans la composition du béton selon l'invention. Ces éléments de renfort peuvent présenter un revêtement organiques. Ce type de traitement est particulièrement recommandé pour les éléments renforts qui sont des produits naturels. De tels éléments renforts sont décrits en détails dans les demandes de brevet WO 99/28267 et EP-A-372804.

Le rapport en poids eau/ciment, traditionnel dans la technique du béton, peut varier lorsqu'on utilise des substituts du ciment, qui sont notamment les éléments à réaction pouzzolanique. Pour les besoins de la présente invention, on a donc défini le rapport pondéral de la quantité d'eau (E) vis-à-vis du poids cumulé du ciment et des éléments à réaction pouzzolanique. Ainsi défini, ce rapport est compris entre 8 et 24 % environ, de préférence entre 13 et 20 % environ. Dans la description des exemples, on a néanmoins utilisé le rapport E/C de l'eau au ciment.

La composition selon l'invention comprend également au moins un agent dispersant (d). Cet agent dispersant est en général un agent fluidifiant L'agent fluidifiant peut être choisi parmi les lignosulfonates, la caséine, les polynaphtalènes, en particulier les polynaphtalènesulfonates de métaux alcalins, les dérivés du formaldéhyde, les polyacrylates de métaux alcalins, les polycarboxylates de métaux alcalins et les polyoxydes d'éthylène greffés. En général, la composition selon l'invention comprend de 0,5 à 2,5 parties en poids d'agent fluidifiant pour 100 parties en poids de ciment.

D'autres additifs peuvent être ajoutés dans la composition selon l'invention, par exemple un agent anti-mousse. A titre d'exemple, on peut utiliser les antimousses à base de polydiméthyl-siloxanes ou de propylène glycol.

Parmi ce type d'agents, on peut citer notamment les silicones sous la forme d'une solution, d'un solide, et de préférence sous la forme d'une résine, d'une huile ou d'une émulsion, de préférence dans l'eau. Conviennent tout particulièrement les silicones comprenant essentiellement des motifs M ($RSiO_{0,5}$) et D ($R_2SiC$). Dans ces formules, les radicaux R, identiques ou différents, sont plus particulièrement choisis parmi l'hydrogène et les radicaux alkyles comprenant 1 à 8 atomes de carbone, le radical méthyle étant préféré. Le nombre de motifs est de préférence compris dans la gamme 30 à 120.

La quantité d'un tel agent dans la composition est généralement d'au plus 5 parties en poids pour 100 parties de ciment.

Sauf indication contraire, les tailles de particules sont mesurées par MET (microscopie électronique en transmission) ou MEB (microscopie électronique par balayage).

La matrice peut contenir encore d'autres ingrédients à conditions que ceux-ci ne perturbent pas les performances attendues du béton.

Le béton peut être obtenu selon tout procédé connu de l'homme du métier, notamment par gâchage des constituants solides et de l'eau, mise en forme (moulage, coulage, injection, pompage, extrusion, calandrage) puis durcissement.

Par exemple, pour préparer le béton, on malaxe les constituants de la matrice cimentaire et les fibres métalliques avec la quantité d'eau adéquate.

Avantageusement, on respecte l'ordre de malaxage suivant :

- malaxage des constituants pulvérulents de la matrice (par exemple 2 minutes) ;
- introduction de l'eau et d'une fraction, par exemple la moitié des adjuvants;
- malaxage (par exemple 1 minute) ;
- introduction de la fraction restante des adjuvants ;
- malaxage (par exemple 3 minutes) ;
- introduction des fibres,
- malaxage (par exemple 2 minutes),

Selon une variante préférée, les fibres organiques sont introduites avant l'ajout d'eau.

Le béton est soumis à une maturation entre 20°C et 100°C pendant la durée nécessaire à l'obtention des caractéristiques mécaniques désirées.

Une maturation à une température proche de l'ambiante fournit de bonnes propriétés mécaniques, et ce, grâce à la sélection des constituants de la matrice cimentaire. Dans ce cas, on laisse mûrir le béton, par exemple à une température voisine de 20"C.

La maturation peut également faire intervenir un traitement thermique entre 60 et 90°C à pression normale sur le béton durci.

Le béton obtenu peut être notamment soumis à un traitement thermique entre 60 et 100°C pendant 6 heures à 4 jours avec une durée optimale de l'ordre de 2 jours, le traitement commençant après la fin de la prise du mélange ou au moins un jour après le début de la prise. En général, des durées de traitement de 6 heures à 72 heures suffisent, dans la gamme de températures précitée.

Le traitement thermique est réalisé en ambiance sèche ou humide ou suivant des cycles faisant alterner les deux ambiances, par exemple 24 heures en ambiance humide suivies de 24 heures en ambiance sèche.

On met en oeuvre ce traitement thermique sur des bétons ayant terminé leur prise, de préférence âgés d'au moins un jour, et encore mieux âgés d'au moins 7 jours environ.

L'addition de poudre de quartz peut être utile lorsque le béton est soumis au traitement thermique précité.

Le béton peut être précontraint en pré-tension par fil adhérent ou par toron adhérent, ou précontraint en post-tension par monotorons gainés graissés ou par câble ou barre sous gaine, le câble étant constitué d'un assemblage de fils ou étant constitué de torons.

La précontrainte, qu'elle soit sous forme de pré-tension, ou sous forme de post-tension, est particulièrement bien adaptée à des produits en béton selon l'invention.

En effet, les câbles de pré-contrainte métalliques ont toujours des résistances à la traction très élevées, mal utilisées, parce que la fragilité de la matrice qui les contient ne permet pas d'optimiser les dimensions des éléments structurels en béton.

Les bétons obtenus selon la présente invention présentent en général une résistance en traction directe Rt d'au moins 8 Mpa. Selon un mode de réalisation préféré, les bétons utiles pour la présente invention présentent une résistance caractéristique à la compression d'au moins 150 MPa et une résistance caractéristique en flexion 4 points Rf d'au moins 25 MPa.

Les bétons obtenus selon l'invention présentent une bonne tenue au feu tel qu'illustrée dans les exemples suivants tout en conservant de bonnes propriétés physiques à l'état non durci et durci.

On donnera ci-après des exemples de réalisation de bétons selon l'invention ainsi que des résultats de tenue au feu obtenus avec ces bétons.

Préparation des échantiltons

Le béton ultra haute performance utilisé dans les exemples suivants est obtenu à partir des composés suivants :

(i) Ciment Portland: à haute teneur en silice, type HTS, provenant de la société LAFARGE (FRANCE).

(ii) Sable : sable de quartz BE31 de la Société SIFRACO (FRANCE) ayant un $D_{75}$ de 350 $\mu$m.

(iii) Farine de Quartz: Qualité C400 avec 50% de grains inférieurs à 10 microns provenant de la Société SIFRACO (FRANCE)

(iv) Fumées de silice :microsilice vitreuse issue de la fabrication du zirconium, type " MST ", avec une surface " BET " de 12 $m^2$/g provenant de la Société S.E.P.R. (FRANCE),

(v) Adjuvant : fluidifiant OPTIMA 100 liquide provenant de la société CHRYSO (France)

(vi) Fibres métalliques : Les fibres métalliques sont des fibres d'acier ayant une longueur de 13 mm, un diamètre de 200 microns et une résistance de rupture en traction de 2800 MPa, fournies par la Société BEKAERT (Belgique). Les quantités mises en oeuvre sont indiquées dans le tableau ci dessous

(vii) Fibres organiques: Les fibres organiques sont des fibres de polypropylène ou d'alcool polyvinylique dont la géométrie et les quantités mises en oeuvre sont définies dans le tableau ci-dessous.

Le béton décrit d'après est obtenu par malaxage des constituants pulvérulents, introduction de l'eau et d'une partie de l'adjuvant, malaxage, introduction de la fraction restante de l'adjuvant, malaxage, introduction des fibres métalliques, malaxage, les fibres organiques étant introduites dans le mélange avant l'addition de l'eau. Dans ces essais, on a utilisé un malaxeur à haute turbulence avec rotation de la cuve, type EIRICH RV02.

Les moules sont remplis avec cette composition, puis vibrés selon les procédures usuelles. Les éprouvettes sont démoulées 48 heures après le coulage. Elles subissent ensuite un traitement thermique consistant à les stocker en étuve à 90°C pendant 48 heures à 100 % d'humidité.

La formule du béton est donnée ci dessous :

| Ciment HTS | Fumée de silice MST | Farine de Quartz C400 | Sable BE31 | Fibres acier | Fibres Organiques | Fuidifiant OPTIMA 100 | Eau E/C |
|---|---|---|---|---|---|---|---|
| 1 | 0,325 | 0,3 | 1,43 | X | Y | 0,054 | 0,22 |

X et Y sont les teneurs en fibres métalliques et organiques indiquées dans le tableau 1.

1ere série de Tests :

Les bétons sont analysés selon les méthodes d'analyse suivantes.

• La résistance à la compression Rc est la valeur obtenue en compression directe sur une éprouvette cylindrique (diamètre 70 mm/hauteur 140 mm) à 20°C.

$$Rc = 4\, F/\pi\, d^2$$

F représentant la force à rupture en N, et d le diamètre des échantillons.

• La résistance en flexion 4 points est mesurée sur une éprouvette 70x70X280 mm montée sur appuis rotulés, suivant les normes NFP 18-411 et NFP 18-409 et ASTM C 1018 selon la formule:

$$Rf = 3Fmax(l-l')/2dw^2$$

où Fmax représente la force maximale en N (force au pic),l = 210 mm et l' = I/3 et d = w = 70 mm.

• La valeur d'étalement est mesurée par la technique de la table à choc (20 coups) selon les normes ASTM C320, ISO 2768-1, EN 459-2.

• La tenue au feu est déterminée en mesurant

(1) la résistance caractéristique à la flexion 4 points résiduelle après la mise en température d'éprouvettes de béton, sous forme de prismes 70x70x250 mm. Les éprouvettes sont isolées sur 2 faces et les 2 faces non isolées sont exposées au feu dans un four pré-chauffé (400 à 500°C) et monté à 800°C en 20 minutes, puis maintenues 1h à 800°C,
(2) la résistance caractéristique à la compression résiduelle après la mise en température d'éprouvettes cubiques retaillées de 70 mm d'arête.
(3) on observe aussi pour chaque échantillon la présence d'écaillage explosif.

Tableau 1.

| Exemples | 1 | 2 | 3* | 4 | 5* | 6 | 7 |
|---|---|---|---|---|---|---|---|
| E/C | 0,22 | 0,22 | 0,22 | 0,22 | 0,22 | 0,22 | 0,22 |
| Fibres métal. (% vol.) X | 1,8 | 2 | 2 | 2 | 2 | 0 | 0 |
| Fibres org. (% vol.) Y | 1,4 | 2 | 0,7 | 0,5 | 1 | 2,8 | 4,4 |
| Nature des fibres org. | PP | PP | APV | PP | PP | APV | APV |

(suite)

| Exemples | 1 | 2 | 3* | 4 | 5* | 6 | 7 |
|---|---|---|---|---|---|---|---|
| Fibres org Longueur (mm) Dim. transversale (μm) ou Diamètre (μm). | 19 50x500 | 19 50x500 | 6 15 | 6 20 | 6 20 | 12 200 | 12 200 |
| Etalement 20 coups (mm) | 160 | 140 | 160 | 200 | 160 | 225 | 190 |
| Résistance à la compression avant exposition au feu (MPa) | 165 | 175,5 | 204,5 | 181,3 | 173,3 | 165,9 | 148,4 |
| Résistance à la flexion avant exposition au feu (MPa) | 32,5 | 25,8 | 30,9 | 26,9 | 23,9 | 15,5 | 22,5 |
| Résistance à la flexion résiduelle après exposition au feu (Mpa) | 9,3 | 11,5 | 9,4 | 11,4 | 8,7 | 0,2 | 0,3 |
| Aspect des éprouvettes après exposition au feu | Fissures importantes et éclatements | Fissures | Fissures | Fissures | Fissures | Fissures et écaillages | Fissures et écaillages |
| Résistance à la compression après exposition au feu (MPa) | 82,3 | 99,5 | 106,4 | 117,4 | 89,5 | 34,1 | 27,9 |
| * qui n'est pas selon l'invention. | | | | | | | |

Dans les exemples 1 et 2, les fibres de polypropylène (PP) sont des fibres FIBERMESH 6130, la température de fusion de ces fibres est de 170°C.

Dans l'exemple 3, les fibres d'alcool polyvinylique (APV) sont des fibres KURARAY RMS 182 dont la température de fusion est de 220°C.

Dans les exemples 4 et 5, les fibres de polypropylène sont des fibres FIBRIN 623 distribuées en France par la société CHRYSO SA.

Dans les exemples 6 et 7 comparatifs, les fibres sont des fibres KURARAY RF 350.

Les résultats obtenus montrent que les fibres de l'exemple 2 (comparatif) (polypropylène l = 19 mm) permettent une tenue au feu correcte pour un dosage de : 2%. Par contre, la rhéologie est très mauvaise (étalement /20 coups : 140 mm). Pour un dosage réduit de l'exemple 1 (comparatif) (1,4%), la rhéologie est sensiblement améliorée (étalement :

160 mm), mais la tenue au feu devient très mauvaise : présence de fissures importantes et d'éclatements.

Avec les fibres organiques de l'exemple 3 (qui n'est pas selon l'invention) (alcool polyvinylique l = 6 mm°) et pour un dosage de 0,7%, la rhéologie reste correcte (étalement 160 mm) et une tenue au feu acceptable (pas d'éclatement).

Les meilleurs résultats sont obtenus avec les fibres des exemples 4 et 5 (qui n'est pas selon l'invention) (polypropylène long. 6 mm). Pour un dosage réduit (0,5%), la rhéologie est excellente (étalement : 200 mm) et la tenue au feu est bonne. Les valeurs de tenue mécanique (compression, flexion) sont élevées.

Avec les bétons des exemples 6 et 7 qui ne contiennent que des fibres organiques, on obtient une bonne valeur d'étalement du béton, cependant ces bétons bien que n'explosant pas lors de l'exposition au feu, présentent des propriétés mécaniques fortement détériorées après exposition au feu.

2ème série de Tests.

- Le béton préparé selon l'exemple 4 est coulé en divers éléments non chargés. Ces éléments sont les suivants :

    - dalles de dimensions : 400 x 300 x 25 mm$^3$
    - colonnes de dimensions: 300 x 300 x 700 mm$^3$ ou 200 x 200 x 900 mm$^3$
    - et poutres en "I" de dimension 2100x150x240 mm$^3$, ayant une âme de 50 mm d'épaisseur.

    Certains des éléments subissent un traitement thermique identique à celui de la première série de tests (*48h à 90°C et 100% d'humidité).* Puis, l'ensemble des éléments traités ou non est soumis au feu selon la norme EN 1365-2 du 18/2/99 pendant 2 heures (soit une température de feu atteinte de 1050°C environ).
    Les résultats des essais sont les suivants :

    - les dalles, avec ou sans traitement thermique, chauffées uniquement sur la face inférieure et chargées à 42 daN transversalement à mi-longueur n'ont subi aucune détérioration,
    - les colonnes, chauffées uniformément, ne présentent pas d'écaillage après l'essai au feu,
    - la poutre, ayant subi un traitement thermique, est chauffée uniformément, et ne présente pas d'écaillage après l'essai.

- Le béton de l'exemple 4 a également été coulé en colonne de section 20 x 20 cm et de hauteur 90 cm.

Après traitement thermique (48h à 90°C et 100% d'humidité), deux colonnes ont été soumises à une charge de compression d'intensité 2000kN (soit 43,6% de ce qu'aurait supporté l'élément), avec une excentricité de 14mm.

Ces échantillons ont été soumis au feu selon la norme EN 1365-2 du 1812199. L'une des colonnes a été capable de supporter la charge pendant 89 minutes et l'autre pendant 82 minutes (ce qui représente une température du feu d'environ 1000°C). Elles ont présenté un écaillage mineur avant la rupture.

**Revendications**

1. Utilisation de fibres organiques présentant une température de fusion inférieure à 200°C, une longueur moyenne supérieure à 1 mm et un diamètre Ø d'au plus 200μm, dans un béton ultra haut performance pour améliorer la résistance au feu du béton, la quantité de fibres organiques étant telle que leur volume est compris entre 0,1 et moins de 1% du volume du béton après la prise et le béton présentant une résistance caractéristique à 28 jours d'au moins 120 MPa, une résistance caractéristique à la flexion d'au moins 20 MPa, et une valeur d'étalement à l'état non durci d'au moins 150 mm, ces valeurs étant données pour un béton conservé et maintenu à 20°C, ledit béton étant constitué d'une matrice cimentaire durcie dans laquelle sont dispersées des fibres métalliques, provenant du mélange avec de l'eau d'une composition comprenant outre les fibres :

    (a) du ciment ;
    (b) des éléments granulaires ayant une taille de grain D$_{90}$ d'au plus 10mm;
    (c) des éléments à réaction pouzzolanique ayant une taille de particules élémentaires comprise entre 0,1 et 100μm,
    (d) au moins un agent dispersant ;

et répondant aux conditions suivantes :

(1) le pourcentage en poids de l'eau par rapport au poids cumulé du ciment (a) et des éléments (c) est compris dans la gamme 8-24% ;

(2) les fibres métalliques présentent une longueur moyenne $\ell_1$ d'au moins 2mm, et un rapport $\ell_1/\varnothing_1$, $\varnothing_1$ étant le diamètre des fibres, d'au moins 20 ;

(3) le rapport $V_1/V$ du volume $V_1$ des fibres métalliques au volume V des fibres organiques est supérieur à 1, et le rapport $\ell_1/1$ de la longueur des fibres métalliques à la longueur des fibres organiques est supérieur à 1.

(4) le rapport R entre la longueur moyenne des fibres métalliques et la taille $D_{90}$ des éléments granulaires est d'au moins 3 ;

(5) la quantité de fibres métalliques est telle que leur volume est inférieur à 4% du volume du béton après la prise.

2. Utilisation selon la revendication 1 **caractérisé en ce que** le béton comprend de plus des éléments renforts capables d'améliorer la ténacité de la matrice choisis parmi des éléments aciculaires ou plaquettaires ayant une taille moyenne d'au plus 1mm, et présents dans une proportion volumique inférieure à 35% du volume cumulé des éléments granulaires (b) et des éléments de réaction pouzzolanique (c).

3. Utilisation selon la revendication 1 ou 2, **caractérisé en ce que** le rapport 1/Ø des fibres organiques est compris entre 20 et 500.

4. Utilisation selon la revendication 1 ou 2, **caractérisé en ce que** les fibres organiques ont une longueur 1 supérieure à 1,5m et au plus égale à 12mm.

5. Utilisation selon l'une des revendications précédentes **caractérisée en ce que** les fibres organiques ont un diamètre inférieur à 80$\mu$m.

6. Utilisation selon l'une des revendications précédentes **caractérisé en ce que** le rapport $V_1/V$ des fibres métalliques aux fibres organiques est d'au moins 2.

7. Utilisation selon l'une des revendications précédentes, **caractérisé en ce que** les fibres organiques consistent en un homopolymère ou copolymère choisis parmi les groupes des chlorure de polyvinyle, polyéthylène, polypropylène, seul ou en mélange.

8. Utilisation selon l'une des revendications précédentes, **caractérisé en ce que** les fibres organiques sont des fibres en prolypropylène.

9. Utilisation selon la revendication 8 dans laquelle les fibres de polypropylène ont une longueur de 6mm et un diamètre de 18$\mu$m.

10. Utilisation selon l'une quelconque des revendications précédentes **caractérisé en ce que** les fibres métalliques sont des fibres d'acier.

11. Utilisation selon l'une des revendications précédentes, **caractérisé en ce que** les fibres métalliques ont une longueur comprise dans la gamme de 5 à 30 mm.

12. Utilisation selon l'une des revendications précédentes, **caractérisée en ce que** la taille de grains $D_{75}$ des éléments granulaires (b) est d'au plus 6mm.

13. Béton ultra haute performance résistant au feu et présentant une résistance caractéristique à la compression à 28 jours d'au moins 120 MPa, une résistance caractéristique à la flexion d'au moins 20 MPa, et une valeur d'étalement à l'état non durci d'au moins 150 mm, ces valeurs étant données pour un béton conservé et maintenu à 20°C ; ledit béton étant constitué d'un matrice cimentaire durcie dans laquelle sont dispersées des fibres métalliques, provenant du mélange avec de l'eau d'une composition comprenant outre les fibres :

(a) du ciment ;

(b) des éléments granulaires ayant une taille de grain $D_{90}$ d'au plus 10mm;

(c) des éléments à réaction pouzzolanique ayant une taille de particules élémentaires comprise entre 0,1 et 100$\mu$m,

(d) au moins un agent dispersant ;
(e) des fibres organiques ;

et répondant aux conditions suivantes :

(1) le pourcentage en poids de l'eau par rapport au poids cumulé du ciment (a) et des éléments (c) est compris dans la gamme 8-24% ;
(2) les fibres métalliques présentent une longueur moyenne $\ell_1$ d'au moins 2mm, et un rapport $\ell_1/\varnothing_1$, $\varnothing_1$ étant le diamètre des fibres, d'au moins 20 ;
(3) les fibres organiques présentent une température de fusion inférieure à 200°C, une longueur moyenne 1 supérieure à 1mm et un diamètre $\varnothing$ d'au plus 200$\mu$m ;
(4) le rapport $V_1/N$ du volume $V_1$ des fibres métalliques au volume V des fibres organiques est supérieur à 1, et le rapport $\ell_1/1$ de la longueur des fibres métalliques à la longueur des fibres organiques est supérieur à 1 ;
(5) le rapport R entre la longueur moyenne $\ell_1$ des fibres métalliques et la taille $D_{90}$ des éléments granulaires est d'au moins 3 ;
(6) la quantité de fibres métalliques est telle que leur volume est inférieur à 4% du volume du béton après la prise ;
(7) la quantité de fibres organiques est telle que leur volume est compris entre 0,1 et moins de 1% du volume du béton après la prise.

**14.** Béton selon l'une des revendications 13, **caractérisé en ce que** les fibres organiques ont un diamètre inférieur à 80$\mu$m.

**15.** Béton selon l'une des revendications 13 à 14 dans lequel le rapport $\ell/\varnothing$ des fibres organiques est compris entre 20 et 500.

**16.** Béton selon l'une des revendications précédentes 13 à 15 dans lequel le rapport volumique $V_1/N$ des fibres métalliques aux fibres organiques est d'au moins 2.

**17.** Béton selon l'une des revendications 13 à 16 dans lequel les fibres organiques ont une longueur au plus égale à 12mm.

**18.** Béton selon l'une des revendications précédentes 13 à 17 **caractérisé en ce que** les fibres organiques sont des fibres en polypropylène ayant une longueur inférieure à 10mm.

**19.** Béton selon la revendication 18 dans lequel les fibres de polypropylène ont une longueur de l'ordre de 6mm et un diamètre de 18$\mu$m.

**20.** Béton selon l'une des revendications précédentes 13 à 19 **caractérisé en ce que** les fibres métalliques sont des fibres d'acier.

**21.** Béton selon l'une des revendications précédentes 13 à 20 **caractérisé en ce que** les fibres métalliques ont une longueur comprise dans la gamme de 5 à 30mm.

**22.** Béton selon l'une des revendications précédentes 13 à 21 **caractérisé en ce qu'**il comprend de plus des éléments renforts capables d'améliorer la ténacité de la matrice choisis parmi des éléments aciculaires ou plaquettaires ayant une taille moyenne d'au plus 1mm, et présents dans une proportion volumique inférieure à 35% du volume cumulé des éléments granulaires (b) et des éléments à réaction pouzzolanique (c).

**23.** Béton selon l'une quelconque des revendications précédentes 13 à 22 **caractérisé en ce que** les éléments renforts ont une taille moyenne d'au plus 500 $\mu$m et sont présents dans une proportion volumique comprise dans la gamme de 5% à 25% du volume cumulé des éléments granulaires (b) et des éléments à réaction pouzzolanique (c).

**24.** Béton selon l'une des revendications précédentes 13 à 23 **caractérisé en ce que** les éléments renforts sont des fibres de wollastonite.

**25.** Béton selon l'une des revendications précédentes 13 à 23 **caractérisé en ce que** les éléments renforts sont des plaquettes de mica.

**26.** Béton selon l'une des revendications précédentes 13 à 25 **caractérisé en ce que** la taille de grains $D_{75}$ des éléments granulaires (b) est d'au plus 6mm.

**27.** Béton selon l'une quelconque des revendications précédentes 13 à 26 **caractérisé en ce qu'**il précontraint en pré-tension.

**28.** Béton selon l'une quelconque des revendications 13 à 26 précédentes **caractérisé en ce qu'**il est précontraint en post-tension.

**29.** Procédé de préparation d'un béton défini selon l'une quelconque des revendications 13 à 28 qui comprend le malaxage du ciment, des éléments granulaires ayant une taille de grain $D_{90}$ d'au plus 10mm, des éléments à réaction pouzzolanique ayant une taille de particules élémentaires comprise entre 0,1 et 100$\mu$m, au moins un agent dispersant, et des fibres organiques, avec la quantité d'eau adéquate, procédé dans lequel les fibres organiques sont introduites dans le mélange avant l'addition d'eau.

**Claims**

**1.** Use of organic fibres having a melting point smaller than 200°C, an average length I greater than 1 mm and a diameter Ø not exceeding 200 $\mu$m, in an ultrahigh-performance concrete in order to improve the fire resistance of the concrete, the amount of organic fibres being such that their volume ranges between 0.1 and less than 1% of the volume of the concrete after curing and the concrete having a characteristic 28-day strength of at least 120 MPa, a characteristic flexural strength of at least 20 MPa and a spread value in the unhardened state of at least 150 mm, these values being given for a concrete stored and maintained at 20°C, said concrete consisting of a hardened cementitious matrix wherein metal fibres are dispersed, which is obtained by mixing, with water, a composition which comprises, apart from the fibres:

(a) cement;
(b) aggregate particles having a particle size $D_{90}$ not exceeding 10 mm;
(c) pozzolanic-reaction particles having an elementary size ranging between 0.1 and 100 $\mu$m ;
(d) at least one dispersing agent.

and meeting the following conditions:

(1) the percentage in weight of water based on the combined weight of the cement (a) and of the particles (c) lies within the 8-24% range;
(2) the metal fibres have an average length $I_1$ of at least 2 mm and an $I_1/Ø_1$ ratio of at least 20, $Ø_1$ being the diameter of the fibres;
(3) the ratio, $V_1/V$, of the volume $V_1$ of the metal fibres to the volume V of the organic fibres is greater than 1 and the ratio $I_1/I$, of the length of the metal fibres to the length of the organic fibres is greater than 1 ;
(4) the ratio R of the average length $I_1$ of the metal fibres to the size $D_{90}$ of the aggregate particles is at least 3;
(5) the amount of metal fibres is such that their volume is less than 4% of the volume of the concrete after curing.

**2.** Use according to claim 1, **characterized in that** the concrete also includes reinforcing particles capable of improving the toughness of the matrix, these being selected from acicular or flake-like particles having a mean size not exceeding 1 mm and present in a volume proportion smaller than 35% of the combined volume of the aggregate articles (b) and of the pozzolanic-reaction particles (c).

**3.** Use according to claim 1 or 2, **characterized in that** the I/ Ø ratio of the organic fibres is between 20 and 500.

**4.** Use according to claim 1 or 2, **characterized in that** the organic fibres have a length 1 greater than 1.5 mm and equal to 12 mm at the most.

**5.** Use according to one of the previous claims, **characterized in that** the organic fibres have a diameter smaller than 80 $\mu$m.

**6.** Use according to one of the previous claims, **characterized in that** the ratio $V_1/V$ of the metal fibres to the organic fibres is at least 2.

7. Use according to one of the previous claims, **characterized in that** the organic fibres consist of a homopolymer or copolymer selected from polyvinyl chloride, polyethylene, polypropylene, alone or as a mixture.

8. Use according to one of the previous claims, **characterized in that** the organic fibres are polypropylene fibres.

9. Use according to claim 8, wherein the polypropylene fibres have a length of 6 mm and a diameter of 18 $\mu$m.

10. Use according to any one of the previous claims, **characterized in that** the metal fibres are steel fibres.

11. Use according to one of the previous claims, **characterized in that** the metal fibres have a length lying within the range from 5 to 30 mm.

12. Use according to one of the previous claims, **characterized in that** the particle size $D_{75}$ of the aggregate particles (b) is 6 mm at the most.

13. A fire-resistant ultrahigh-performance concrete having a characteristic 28-day compressive strength of at least 120 MPa, a characteristic flexural strength of at least 20 MPa and a spread value in the unhardened state of at least 150 mm, these values being given for a concrete stored and maintained at 20°C; said concrete consisting of a hardened cementitious matrix wherein metal fibres are dispersed, which is obtained by mixing, with water, a composition which comprises, apart from the fibres:

    (a) cement;
    (b) aggregate particles having a particle size $D_{90}$ not exceeding 10 mm;
    (c) pozzolanic-reaction particles having an elementary size ranging between 0.1 and 100 $\mu$m;
    (d) at least one dispersing agent;
    (e) organic fibres;

and meeting the following conditions:

    (1) the percentage in weight of water based on the combined weight of the cement (a) and of the particles (c) lies within the 8-24% range;
    (2) the metal fibres have an average length $l_1$ of at least 2 mm and an $l_1/\varnothing_1$ ratio of at least 20, $\varnothing_1$ being the diameter of the fibres;
    (3) the organic fibres have a melting point smaller than 200°C, an average length $l$ greater than 1 mm and a diameter $\varnothing$ not exceeding 200 $\mu$m;
    (4) the ratio, $V_1/V$, of the volume $V_1$ of the metal fibres to the volume $V$ of the organic fibres is greater than 1 and the ratio, $l_1/l$, of the length of the metal fibres to the length of the organic fibres is greater than 1 ;
    (5) the ratio $R$ of the average length $l_1$ of the metal fibres to the size $D_{90}$ of the aggregate particles is at least 3;
    (6) the amount of metal fibres is such that their volume is less than 4% of the volume of the concrete after curing;
    (7) the amount of organic fibres is such that their volume ranges between 0.1 and less than 1% of the volume of the concrete after curing.

14. The concrete according to claim 13, **characterized in that** the organic fibres have a diameter smaller than 80 $\mu$m.

15. The concrete according to one of claims 13 or 14, wherein the $l/\varnothing$ ratio of the organic fibres is between 20 and 500.

16. The concrete according to one of the preceding claims 13 to 15, wherein the volume ratio $V_1/V$ of the metal fibres to the organic fibres is at least 2.

17. The concrete according to one of claims 13 to 16, wherein the organic fibres have a length not exceeding 12 mm.

18. The concrete according to one of the preceding claims 13 to 17, **characterized in that** the organic fibres are polypropylene fibres having a length smaller than 10 mm.

19. The concrete according to claim 18, wherein the polypropylene fibres have a length of about 6 mm and a diameter of 18 $\mu$m.

20. The concrete according to one of the preceding claims 13 to 19, **characterized in that** the metal fibres are steel fibres.

21. The concrete according to one of the preceding claims 13 to 20, **characterized in that** the metal fibres have a length lying within the range from 5 to 30 mm.

22. The concrete according to one of the preceding claims 13 to 21, **characterized in that** it also includes reinforcing particles capable of improving the toughness of the matrix, these being selected from acicular or flake-like particles having a mean size not exceeding 1 mm and present in a volume proportion smaller than 35% of the combined volume of the aggregate particles (b) and of the pozzolanic-reaction particles (c).

23. The concrete according to any one of the preceding claims 13 to 22, **characterized in that** the reinforcing particles have an average size not exceeding 500 $\mu$m and are present in a volume proportion lying within the range from 5% to 25% of the combined volume of the aggregate particles (b) and of the pozzolanic-reaction particles (c).

24. The concrete according to one of the preceding claims 13 to 23, **characterized in that** the reinforcing particles are wollastonite fibres.

25. The concrete according to one of the preceding claims 13 to 23, **characterized in that** the reinforcing particles are mica flakes.

26. The concrete according to one of the preceding claims 13 to 25, **characterized in that** the particle size $D_{75}$ of the aggregate particles (b) is 6 mm at the most.

27. The concrete according to any one of the preceding claims 13 to 26, **characterized in that** it is prestressed in pretension.

28. The concrete according to any one of the preceding claims 13 to 26, **characterized in that** it is prestressed in post-tension.

29. The process for producing a concrete defined according to any one of claims 13 to 28, which comprises mixing cement; aggregate particles having a particle size $D_{90}$ of at most 10 mm; pozzolanic-reaction particles having an elementary particle size of between 0.1 and 100 $\mu$m; at least one dispersing agent; and organic fibers, with a suitable amount of water, in which process the fibers are introduced into the mix before adding water.

**Patentansprüche**

1. Verwendung von organischen Fasern, die eine Schmelztemperatur von unter 200°C, eine mittlere Länge l von über 1 mm und einen Durchmesser 0 von höchstens 200 $\mu$m aufweisen, in einem ultrahochleistungsfähigen Beton zur Verbesserung der Feuerfestigkeit des Betons, wobei die Menge der organischen Fasern so groß ist, dass ihr Volumen zwischen 0,1 und weniger als 1% des Volumens des Betons nach dem Abbinden liegt, und der Beton eine charakteristische nach 28 Tagen von wenigstens 120 MPa, eine charakteristische Biegefestigkeit von wenigstens 20 MPa und einen Ausbreitungswert im ungehärteten Zustand von wenigstens 150 mm aufweist, wobei diese Werte für einen bei 20°C aufbewahrten und auf 20°C gehaltenen Beton angegeben werden, wobei der Beton aus einer gehärteten Zementmatrix, in der Metallfasern dispergiert sind, besteht und durch Mischen einer Zusammensetzung, die außer den Fasern folgendes enthält, mit Wasser gewonnen wird:

(a) Zement;
(b) körnige Elemente mit einer Korngröße $D_{90}$ von höchstens 10 mm;
(c) puzzolanisch reagierende Elemente mit einer Elementarteilchengröße zwischen 0,1 und 100 $\mu$m;
(d) wenigstens ein Dispergiermittel;

wobei der Beton den folgenden Bedingungen genügt:

(1) der Gewichtsprozentwert des Wassers in Bezug auf die Summe der Gewichte des Zements (a) und der Elemente (c) liegt im Bereich von 8 bis 24%;
(2) die Metallfasern haben eine mittlere Länge $l_1$ von wenigstens 2 mm und ein Verhältnis $l_1/\varnothing_1$ von wenigstens 20, wobei $\varnothing_1$ der Durchmesser der Fasern ist;
(3) das Verhältnis $V_1/V$ des Volumens $V_1$ der Metallfasern zum Volumen $V$ der organischen Fasern ist größer als 1, und das Verhältnis $l_1/l$ der Länge der Metallfasern zur Länge der organischen Fasern ist größer als 1;

(4) das Verhältnis R zwischen der mittleren Länge $I_1$ der Metallfasern und der Größe $D_{90}$ der körnigen Elemente beträgt wenigstens 3;

(5) die Menge der Metallfasern ist so groß, dass ihr Volumen weniger als 4% des Volumens des Betons nach dem Abbinden beträgt.

2. Verwendung gemäß Anspruch 1, **dadurch gekennzeichnet, dass** der Beton außerdem Verstärkungselemente umfasst, die die Zähigkeit der Matrix verbessern können und die ausgewählt sind aus nadelförmigen oder plättehenartigen Elementen mit einer mittleren Größe von höchstens 1 mm, die in einem Volumenanteil vorhanden sind, der kleiner als 35% der Summe des Volumens der körnigen Elemente (b) und der puzzolanisch reagierenden Elemente (c) ist.

3. Verwendung gemäß Anspruch 1 oder 2, **dadurch gekennzeichnet, dass** das Verhältnis I/Ø der organischen Fasern zwischen 20 und 500 liegt.

4. Verwendung gemäß Anspruch 1 oder 2, **dadurch gekennzeichnet, dass** die organischen Fasern eine Länge I von über 1,5 mm und höchstens 12 mm haben.

5. Verwendung gemäß einem der vorstehenden Ansprüche, **dadurch gekennzeichnet, dass** die organischen Fasern einen Durchmesser von weniger als 80 $\mu$m haben.

6. Verwendung gemäß einem der vorstehenden Ansprüche, **dadurch gekennzeichnet, dass** das Verhältnis $V_1$/V der Metallfasern zu den organischen Fasern wenigstens 2 beträgt.

7. Verwendung gemäß einem der vorstehenden Ansprüche, **dadurch gekennzeichnet, dass** die organischen Fasern aus einem Homopolymer oder Copolymer bestehen, das aus der Gruppe Polyvinylchlorid, Polyethylen, Polypropylen, allein oder im Gemisch, ausgewählt ist.

8. Verwendung gemäß einem der vorstehenden Ansprüche, **dadurch gekennzeichnet, dass** die organischen Fasern Polypropylenfasern sind.

9. Verwendung gemäß Anspruch 8, **dadurch gekennzeichnet, dass** die Polypropylenfasern eine Länge von 6 mm und einen Durchmesser von 18 $\mu$m haben.

10. Verwendung gemäß einem der vorstehenden Ansprüche, **dadurch gekennzeichnet, dass** die Metallfasern Stahlfasern sind.

11. Verwendung gemäß einem der vorstehenden Ansprüche, **dadurch gekennzeichnet, dass** die Metallfasern eine Länge im Bereich von 5 bis 30 mm haben.

12. Verwendung gemäß einem der vorstehenden Ansprüche, **dadurch gekennzeichnet, dass** die Korngröße $D_{75}$ der körnigen Elemente (b) höchstens 6 mm beträgt.

13. Ultrahochleistungsfähiger Beton, der feuerfest ist und eine charakteristische Druckfestigkeit nach 28 Tagen von wenigstens 120 MPa, eine charakteristische Biegefestigkeit von wenigstens 20 MPa und einen Ausbreitungswert im ungehärteten Zustand von wenigstens 150 mm aufweist, wobei diese Werte für einen bei 20°C aufbewahrten und auf 20°C gehaltenen Beton angegeben werden; wobei der Beton aus einer gehärteten Zementmatrix, in der Metallfasern dispergiert sind, besteht und durch Mischen einer Zusammensetzung, die außer den Fasern folgendes enthält, mit Wasser gewonnen wird:

(a) Zement;
(b) körnige Elemente mit einer Korngröße $D_{90}$ von höchstens 10 mm;
(c) puzzolanisch reagierende Elemente mit einer Elementarteilchengröße zwischen 0,1 und 100 $\mu$m;
(d) wenigstens ein Dispergiermittel;
(e) organische Fasern;

wobei der Beton den folgenden Bedingungen genügt:

(1) der Gewichtsprozentwert des Wassers in Bezug auf die Summe der Gewichte des Zements (a) und der

Elemente (c) liegt im Bereich von 8 bis 24%;

(2) die Metallfasern haben eine mittlere Länge $l_1$ von wenigstens 2 mm und ein Verhältnis $l_1/\varnothing_1$ von wenigstens 20, wobei $\varnothing_1$ der Durchmesser der Fasern ist;

(3) die organischen Fasern weisen eine Schmelztemperatur von unter 200°C, eine mittlere Länge I von über 1 mm und einen Durchmesser 0 von höchstens 200 $\mu$m auf;

(4) das Verhältnis $V_1/V$ des Volumens $V_1$ der Metallfasern zum Volumen V der organischen Fasern ist größer als 1, und das Verhältnis $l_1/I$ der Länge der Metallfasern zur Länge der organischen Fasern ist größer als 1;

(5) das Verhältnis R zwischen der mittleren Länge $l_1$ der Metallfasern und der Größe $D_{90}$ der körnigen Elemente beträgt wenigstens 3;

(6) die Menge der Metallfasern ist so groß, dass ihr Volumen weniger als 4% des Volumens des Betons nach dem Abbinden beträgt;

(7) die Menge der organischen Fasern ist so groß, dass ihr Volumen zwischen 0,1 und wenigsten 1% des Volumens des Betons nach dem Abbinden liegt.

**14.** Beton gemäß Anspruch 13, **dadurch gekennzeichnet, dass** die organischen Fasern einen Durchmesser von unter 80 $\mu$m haben.

**15.** Beton gemäß einem der Ansprüche 13 oder 14, wobei das Verhältnis I/Ø der organischen Fasern zwischen 20 und 500 liegt.

**16.** Beton gemäß einem dervorstehenden Ansprüche 13 bis 15, wobei das Volumenverhältnis V1/V der Metallfasern zu den organischen Fasern wenigstens 2 beträgt.

**17.** Beton gemäß einem der Ansprüche 13 bis 16, wobei die organischen Fasern eine Länge von höchstens 12 mm haben.

**18.** Beton gemäß einem der vorstehenden Ansprüche 13 bis 17, **dadurch gekennzeichnet, dass** die organischen Fasern Polypropylenfasern mit einer Länge von weniger als 10 mm sind.

**19.** Beton gemäß Anspruch 18, wobei die Polypropylenfasern eine Länge in der Größenordnung von 6 mm und einen Durchmesser von 18 $\mu$m haben.

**20.** Beton gemäß einem der vorstehenden Ansprüche 13 bis 19, **dadurch gekennzeichnet, dass** die Metallfasern Stahlfasern sind.

**21.** Beton gemäß einem der vorstehenden Ansprüche 13 bis 20, **dadurch gekennzeichnet, dass** die Metallfasern eine Länge im Bereich von 5 bis 30 mm haben.

**22.** Beton gemäß einem der vorstehenden Ansprüche 13 bis 21, **dadurch gekennzeichnet, dass** er außerdem Verstärkungselemente umfasst, die die Zähigkeit der Matrix verbessern können und die ausgewählt sind aus nadelförmigen oder plättchenartigen Elementen mit einer mittleren Größe von höchstens 1 mm, die in einem Volumenanteil vorhanden sind, der kleiner als 35% der Summe des Volumens der körnigen Elemente (b) und der puzzolanisch reagierenden Elemente (c) ist.

**23.** Beton gemäß einem der vorstehenden Ansprüche 13 bis 22, **dadurch gekennzeichnet, dass** die Verstärkungselemente eine mittlere Größe von höchstens 500 $\mu$m haben und in einem Volumenanteil vorhanden sind, der im Bereich von 5 bis 25% der Summe des Volumens der körnigen Elemente (b) und der puzzolanisch reagierenden Elemente (c) liegt.

**24.** Beton gemäß einem der vorstehenden Ansprüche 13 bis 23, **dadurch gekennzeichnet, dass** die Verstärkungselemente Wollastonitfasern sind.

**25.** Beton gemäß einem der vorstehenden Ansprüche 13 bis 23, **dadurch gekennzeichnet, dass** die Verstärkungselemente Glimmerplättchen sind.

**26.** Beton gemäß einem der vorstehenden Ansprüche 13 bis 25, **dadurch gekennzeichnet, dass** die Korngröße $D_{75}$ der körnigen Elemente (b) höchstens 6 mm beträgt.

**27.** Beton gemäß einem der vorstehenden Ansprüche 13 bis 26, **dadurch gekennzeichnet, dass** er im Verbund vorgespannt wird.

28. Beton gemäß einem der vorstehenden Ansprüche 13 bis 26, **dadurch gekennzeichnet, dass** er mit nachträglichem Verbund vorgespannt wird.

29. Verfahren zur Herstellung eines Betons, wie er gemäß einem der Ansprüche 13 bis 28 definiert ist, umfassend das Mischen des Zements, der körnigen Elemente mit der Korngröße $D_{90}$ von höchstens 10 mm, der puzzolanisch reagierenden Elemente mit einer Elementarteilchengröße zwischen 0,1 und 100 $\mu$m, wenigstens eines Dispergiermittels und der organischen Fasern mit einer geeigneten Menge Wasser, wobei die Fasern bei diesem Verfahren vor der Zugabe von Wasser in das Gemisch eingeführt werden.

**EP 1 263 690 B2**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 9501316 A
- WO 9928267 A
- WO 9958468 A
- US 5749961 A
- WO 9601787 A
- EP 372804 A